# EUROPÄISCHE PATENTSCHRIFT

(11) **EP 1 774 188 B1**
(45) Veröffentlichungstag und Bekanntmachung des Hinweises auf die Patenterteilung: **29.12.2010**
(21) Anmeldenummer: 05775990.4
(22) Anmeldetag: 04.08.2005
(51) Int. Cl.: F16C 33/62, F16C 33/64, F16C 33/32, F16C 33/34, C22C 38/18

(54) **HYBRIDWÄLZLAGER**
HYBRID ROLLER BEARING
PALIER À ROULEMENT HYBRIDE

(30) Priorität: 04.08.2004 US 598785 P
(43) Veröffentlichungstag der Anmeldung: 18.04.2007
(73) Patentinhaber: Schaeffler Technologies GmbH & Co. KG, 91074 Herzogenaurach (DE)
(72) Erfinder: BEER, Oskar, 84032 Landshut (DE); EBERT, Franz-Josef, 97762 Hammelburg (DE); KREISELMEIER, Gerhard, 97456 Dittelbrunn (DE); STREIT, Edgar, 97711 Poppenlauer (DE)
(86) Internationale Anmeldenummer: PCT/DE2005/001398
(87) Internationale Veröffentlichungsnummer: WO 2006/012895

(56) Entgegenhaltungen:
- WO-A-98/41663
- DE-A1- 10 222 266
- DE-A1- 19 628 825
- US-A1- 2002 066 502
- US-B1- 6 770 152

## Beschreibung

### Gebiet der Erfindung

Die Erfindung betrifft ein Wälzlager, mit wenigstens einem ersten Wälzpartner aus einem keramischen Werkstoff sowie mit wenigstens einem zweiten Wälzpartner aus einem Stahl.

### Hintergrund der Erfindung

Die Erfindung betrifft demnach Hybridlager. Hybridlager sind Wälzlager, die Lagerringe, jedoch wenigstens die Laufbahnen der Lagerringe, aus Stahl aufweisen und die mit Wälzkörpern aus Keramik versehen sind oder von denen wenigstens ein Lagerring aus Keramik und die Wälzkörper aus Stahl sind. Ein derartiges Lager, von dem der Anspruch 1 im Oberbegriff ausgeht, ist aus der US 6 770 152 B1 bekannt.

Die verwendeten Werkstoffe für den keramischen Wälzpartner sind alle technischen Keramiken insbesondere Siliziumnitrid (Si₃N₄), aber auch Siliziumkarbide sowie Aluminium- und Zinkoxide. Der Einsatz, der Aufbau und die Vor- und Nachteile des Einsatzes von Hybridlagern sind ausführlich in der Veröffentlichung der FAG Kugelfischer Georg Schäfer KGaA, Publ.-Nr. WL 40 204 DA 80/11 aus 1990 "Hochleistungskeramik in FAG Wälzlagern" beschrieben.

Hervorragende Eigenschaften von Keramik als Wälzlagerwerkstoff für hoch-und höchstbeanspruchte Wälzlagerteile sind Eigenschaften, wie niedriges Gewicht, geringe Wärmeausdehnung, hohe Härte und Warmfestigkeit, gute Maßstabilität bei extrem hohen Temperaturen, hohe chemische Beständigkeit und hohe Korrosionsbeständigkeit, hoher Elastizitätsmodul, geringeres Reibmoment bei hohen Drehzahlen und geringere Temperaturentwicklung, fehlender Magnetismus und Isolatoreigenschaften.

Bei der Ermittlung der Belastungen an schnelllaufenden Wälzlagern ist auch die Fliehkraft der Wälzkörper zu berücksichtigen. Bei sehr hohen Drehzahlen, wie zum Beispiel bei Anwendungen in Triebwerken, dominieren in der Regel sogar die Fliehkräfte gegenüber den Lagerlasten. Aufgrund des geringen Gewichtes von Keramik werden bei hohen Drehzahlen geringere Fliehkräfte an Wälzkörpern aus Keramik erzeugt. Die Dichte von Keramik, beispielsweise Siliziumnitrid, liegt nur bei ca. 40% der Dichte von Stahl.

Keramikwerkstoffe weisen ein wesentlich höheres Elastizitätsmodül, etwa das 1,5fache, gegenüber von Stahl auf. Dadurch ist bei gleicher Belastung die spezifische Beanspruchung im Wälzkontakt höher als bei Kontaktpartnern aus Stahl, weil die im Wälzkontakt durch die keramischen Wälzkörper erzeugte Druckellipse kleiner ist. Generell sind somit Wälzpaarungen, bei denen beide Bauteile aus Keramik sind und insbesondere in Wälzpaarungen bei denen ein Wälzpartner aus Stahl und der andere aus Keramik ist, gegenüber Wälzpaarungen bei denen beide Kontaktpartner aus Stahl weniger belastbar.

Grundsätzlich weisen Bauteile aus Keramik im Vergleich zu Bauteilen aus Wälzlagerstahls ein deutlich anderes Ausfallverhalten auf. Aufgrund der Sprödigkeit des keramischen Werkstoffes geht Keramik bei Überbeanspruchung ohne nennenswerte plastische Verformung zu Bruch. Diese Eigenschaft veranlasste den Fachmann zu der Überlegung, dass im Falle von Schäden an Bauteilen aus Keramik, wie Abbruch von Oberflächenteilchen, in einem Wälzlager zunächst die keramischen Bauteile massiv und dann später als Folgeerscheinung erst die Bauteile aus Stahl geschädigt werden. Wie sich jedoch herausstellte und wie es auch in dem zuvor zitierten Stand der Technik beschrieben ist, erweisen sich auch durch Verunreinigungen und Einschlüsse und Poren, Risskeime und Mikrorisse und Überlastung bzw. durch Fremdpartikel im Wälzkontakt vorgeschädigte keramische Bauteile zunächst unter Umständen als langlebig. Der Abrieb der Keramik bzw. aus der Oberfläche des keramischen Bauteiles ausgebrochene Teilchen wirken zum Teil wie Schmirgel auf die Laufbahnen aus Stahl oder gelangen in den Wälzkontakt und schädigen dort zunächst Randschichten der Wälzpartner aus Stahl.

Die Empfindlichkeit der Oberflächen der Wälzlagerteile aus Stahl ist von der Art und Größe der an und unterhalb der Oberfläche (in der Randschicht) vorherrschenden Spannungen abhängig. Unter Arten sind in diesem Fall Eigenspannungen (Zug- oder Druckspannungen) in der Randschicht des Bauteiles oder durch Fremdeinwirkung auf das Bauteil einwirkende Spannungen zu verstehen. Zugspannungen an der Oberfläche und in der Randschicht unterhalb der Oberfläche erhöhen die Empfindlichkeit des Bauteiles. Derartige Zugspannungen werden zum einen durch die Vorbehandlung (Wärmebehandlung und Hartbearbeitung) des Bauteiles sowie durch Betriebsbedingungen hervorgerufen, denen das Bauteil ausgesetzt ist. So werden zum Beispiel an der Außenlaufbahn eines Innenringes und an den Borden die Zugeigenspannungen durch Zugspannungen aus dem erforderlichen Presssitz des Innenringes beispielsweise auf einer Welle weiter verstärkt. Wenn dieser Innenring zusätzlich mit hohen Drehzahlen rotiert, können die Zugspannungen ein Niveau erreichen, bei dem die Ausfall-Empfindlichkeit des Innenringes wesentlich erhöht wird. Lokale hohe Kontaktpressung durch Abbruchpartikel der Keramikbauteile, die in den Wälzkontakt gelangen, können die Randschicht der Laufbahnen so schädigen, dass Mikrorisse entstehen. Diese Mikrorisse setzen sich dann in Pittings und in weiteren massiven Schädigungen fort.

Ähnliche Effekte auf die Wälzpartner aus Stahl üben die harten und scharfkantigen Ränder der möglichen Ausbruchstellen des Wälzpartners aus Keramik aus. Diese Ausbruchstellen beanspruchen die Oberfläche aus Stahl im hohen Maße durch abrasiven Verschleiß. Bei hohen Drehzahlen und Belastungen kann dadurch die Schadensfortschrittgeschwindigkeit drastisch erhöht werden.

Der Einsatz von keramischen Bauteilen mit den zuvor beschriebenen Materialfehlern ist weitestgehend durch geeignete Prüfung und damit Ausschluss von derartig fehlerhaften Teilen vermieden. Der Wälzkontakt ist jedoch insbesondere in stark von der Umgebung beeinflussten Lagern durch Fremdpartikel, die zum Beispiel mit dem Schmierstoff in den Wälzkontakt gelangen, gefährdet. Derartige Fremdpartikel verursachen dann ebenso nach den zuvor genannten Mechanismen zunächst die Zerstörung an Wälzpartnern aus Stahl.

### Zusammenfassung der Erfindung

Die Aufgabe der Erfindung ist es daher, ein Wälzlager zu schaffen, mit dem die vorgenannten Nachteile vermieden werden.

Diese Aufgabe ist nach dem Gegenstand des Anspruches 1 gelöst.

Die Druckeigenspannungen, zumindest in der Randschicht des Abschnittes, sind erfindungsgemäß durch ein thermochemisches Verfahren erzeugt, bei dem die tieferen Randschichtbereiche zwischen 100 µm und 700 µm unterhalb der Oberfläche Druckeigenspannungen aufweisen können - jedoch auch in Nähe der Oberfläche die Druckeigenspannungen so hoch sind, dass diese sich möglichst auch unter extremen Betriebsbedingungen nicht in die nachteiligen Zugspannungen umwandeln können.

Derartige Druckeigenspannungen lassen sich gezielt thermochemisch erzeugen.

Die Oberfläche des erfindungsgemäßen Bauteiles ist somit aufgrund der eingestellten Werte auch oberflächennah wenig empfindlich gegenüber hohen Flächenpressungen bzw. gegenüber Kerbwirkungen und damit besser für eine Wälzpaarung mit Bauteilen aus Keramik geeignet.

Die Erfindung sieht weiter vor, dass die Randschicht eine Oberflächenhärte von mindestens 850 HV0,3 , jedoch vorzugsweise eine Oberflächenhärte von 900 HV0,3 in zumindest an dem Abschnitt in einer Tiefe von 0,05mm unter der Oberfläche aufweist. Die Vickers-Härte wird mit einer Last auf die Prüfpyramide (aus Diamant) von 0,3 kg geprüft.

Der Wert der Druckeigenspannungen ist nach der Erfindung bis zu einer Tiefe von </= 40 µm mindestens -300 MPa d.h. zum Beispiel -1000 MPa oder weniger. Demnach entspricht der Wert der Druckspannung als Absolutbetrag (nach mathematischer Definition des Begriffes Betrag) bei einer Tiefe bis zu 40 µm mindestens 300 MPa und mehr, beispielsweise 1200MPa. Dieser Zustand ist durch eine thermochemische Veränderung zumindest der Randschicht und zumindest in dem Abschnitt für den Wälzkontakt ausgebildet.

Das Wälzlagerteil = zweiter Wälzpartner ist lastfrei, wenn es als Bauteil fertig hergestellt, zumindest an dem Abschnitt mit den Druckspannungen unter der Oberfläche, noch keinen Belastungen ausgesetzt ist, die die Art und die Größe der Druckeigenspannungen gemäß Erfindung verändern oder überlagern. Die Belastungen können kinematischer oder mechanischer Natur sein. Derartige Belastungen resultieren zum Beispiel aus dem Einbau des Wälzlagerteiles in die Umgebungskonstruktion, wie Belastungen aus einem Presssitz auf einen Innenring des Wälzlagers. Andere Belastungen sind die, denen das Bauteil im Betrieb ausgesetzt ist, wie zum Beispiel Fliehkräften aus Rotation oder Pressungen aus Punkt-, Linien- oder Flächenberührungen im Gleit oder Wälzkontakt mit anderen Elementen. Weitere Beispiele für derartige Belastungen sind Kerbwirkung, Biegung, Zug und Druck.

Die Druckeigenspannungen sind zumindest in einem Abschnitt unterhalb der Oberfläche des Lagerteiles ausgebildet, der für eine Wälzpaarung mit mindestens einem weiteren Wälzpartner vorgesehen ist. Diese Druckeigenspannungen im Gefüge des Stahles sind, wie schon erwähnt, vorzugsweise mittels eines thermochemischen Wärmebehandlungsverfahrens in der Randschicht erzeugt. Die gesamte Oberfläche oder nur ein Abschnitt des erfindungsgemäßen Wälzlagerteiles sind somit aufgrund der eingestellten Werte auch oberflächennah wenig empfindlich gegenüber hohen Flächenpressungen bzw. gegenüber Kerbwirkungen. Beispiele für Abschnitte an Oberflächen sind zum Beispiel die Randzonen der Wälzlaufbahnen an Lagerringe eines Wälzlagers oder die Randzonen an den Lagerringen, die zur Radialführung eines Käfigs vorgesehen sind. Ein Beispiel für ein Maschinenelement, unter dessen gesamter Oberfläche die erfindungsgemäßen Druckeigenspannungen ausgebildet sind, ist die Kugel als Wälzkörper in einem Wälzlager.

Die Erfindung sieht vor, dass die Druckeigenspannungen in einer fertig bearbeiteten Randschicht ausgebildet sind. Unter fertig bearbeiteten Randschicht ist zum Beispiel die fertig geschliffene und ggf. gehonte Laufbahn des Wälzlagers oder eine derartig maschinell bearbeitete Oberfläche eines Wälzkörpers, wie die einer Kugel oder die einer Rolle bzw. wie die auf diese oder ähnliche Weise bearbeiteten Laufflächen eines Kugelgewindetriebes, zu verstehen. Die Druckeigenspannungen sind zum Beispiel in einer mit Stickstoff angereicherten Randschicht ausgebildet. Diese Randschicht ist durch Gasnitrieren und vorzugsweise durch Plasmanitrieren erzeugt.

Bei einer weiteren Ausgestaltung der Erfindung wird davon ausgegangen, dass die Randschicht durch so genanntes Doppel- (Duplex-) Härten erzeugt ist, d. h., zunächst wird der Stahl gehärtet und anschließend einer weiteren thermochemischen Wärmebehandlung unterzogen, in der die Randschicht entsteht. Das Verfahren Härten ist das dem Fachmann bekannte übliche Verfahren, bei dem der Stahl austenitisiert, abgeschreckt und angelassen wird. Damit folgt der ersten Wärmebehandlung, die durch bekanntes Härten charakterisiert ist und einen Anlassvorgang einschließt, eine zweite Wärmebehandlung, mit der die erfindungsgemäßen Druckspannungen erzeugt werden. Es ist vorgesehen, dass der Stahl ein Hochtemperaturstahl ist, dessen Gefüge eine Anlasstemperatur des ersten Härteverfahrens von wenigstens 400° C zulässt. Die beim anschließenden Randschichthärten angewandte Temperatur liegt demnach über 400° C, für Plasmanitrieren zum Beispiel in einem Bereich von 400° C bis 600° C. Die Anlasstemperatur des ersten Härteverfahrens liegt oberhalb der Temperatur, die beim Nitrieren der Randschicht angewandt wird.

Weitere Ausgestaltungen der Erfindungen sehen die Anwendung der Erfindung für Stähle mit den nachfolgend angeführten Bezeichnungen und Mindestzusammensetzungen vor:
a. mit der Bezeichnung M50 (AMS 6491) mit
   - 0,8 bis 0,85 Gewichts- % C
   - 4 bis 4,25 Gewichts- % Cr
   - 4 bis 4,5 Gewichts- % Mo
   - 0,15 bis 0,35 Gewichts- % Mn
   - 0,1 bis 0,25 Gewichts- % Si
   - 0, 9 bis 1,1 Gewichts- % V
   - max. 0, 015 Gewichts- % P
   - max. 0,008 Gewichts- % S
   und mit weiteren legierungsbestimmten Anteilen und mit Eisen sowie mit den üblichen Verunreinigungen.
b. mit der Bezeichnung M50NIL (AMS6278) mit:
   - 0,11 bis 0,15 Gewichts- % C
   - 4,0 bis 4,25 Gewichts- % Cr
   - 4,0 bis 4,5 Gewichts- % Mo
   - 1,1 bis 1,3 Gewichts- % V
   - 3,2 bis 3,6 Gewichts- % Ni.
   - 0,15 bis 0,35 Gewichts- % Mn
   - 0,1 bis 0,25 Gewichts- % Si
   - max. 0,015 Gewichts- % P
   - max. 0,008 Gewichts- % S
   und mit weiteren legierungsbestimmten Anteilen und mit Eisen sowie mit den üblichen Verunreinigungen.
c. mit der Bezeichnung 32CD V13 (AMS6481) mit mindestens:
   - 0,29 bis 0,36 Gewichts- % C
   - 2,8 bis 3,3 Gewichts- % Cr
   - 0,7 bis 1,2 Gewichts- % Mo
   - 0,15 bis 0,35 Gewichts- % V
   - 0,4 bis 0,7 Gewichts- % Mn
   - 0,1 bis 0,4 Gewichts- % Si
   - max. 0,025 Gewichts- % P
   - max. 0,02 Gewichts- % S
   und mit weiteren legierungsbestimmten Anteilen und mit Eisen sowie mit den üblichen Verunreinigungen.
d. mit der Bezeichnung T1 (S 18-0-1) mit:
   - 0,7 bis 0,8 Gewichts- % C
   - 4 bis 5 Gewichts- % Cr
   - 17,5 bis 18,5 Gewichts- % Wo
   - 1 bis 1,5 Gewichts- % V
   - 0 bis 0,4 Gewichts- % Mn
   - 0,15 bis 0,35 Gewichts- % Si
   - max. 0, 025 Gewichts- % P
   - max. 0, 008 Gewichts- % S
   und mit weiteren legierungsbestimmten Anteilen und mit Eisen sowie mit den üblichen Verunreinigungen.
e. mit der Bezeichnung RBD mit:
   - 0,17 bis 0,21 Gewichts- % C
   - 2,75 bis 3,25 Gewichts- % Cr
   - 9,5 bis 10,5 Gewichts- % Wo
      0,2 bis 0,4 Gewichts- % Mn
      0 bis 0,35 Gewichts- % Si
   - 0,35 bis 0,5 Gewichts- % V
   - max. 0, 015 Gewichts- % P
   - max. 0, 015 Gewichts- % S
   und mit weiteren legierungsbestimmten Anteilen und mit Eisen sowie mit den üblichen Verunreinigungen.
f. mit der Bezeichnung Pyrowear 675 (AMS5930) mit:
   - 0,06 bis 0,08 Gewichts- % C
   - 12,8 bis 13,3 Gewichts- % Cr
   - 1,5 bis 2,0 Gewichts- % Mo
   - 0,5 bis 0,7 Gewichts- % V
   - 2,2 bis 2,8 Gewichts- % Ni
   - 4,8 bis 5,8 Gewichts- % Co
   - 0,5 bis 1,0 Gewichts- % Mn
   - 0,2 bis 0,6 Gewichts- % Si
   und mit weiteren legierungsbestimmten Anteilen und mit Eisen sowie mit den üblichen Verunreinigungen.

Die Erfindung betrifft Wälzlagerteile, die in wenigstens einer Paarung mit einem weiteren Wälzlagerteil oder im Kontakt mit mehreren Wälzpartnern einer Wälzbelastung ausgesetzt sind. Der Begriff Wälzbelastung steht auch für die zumeist unerwünschten Gleitpaarungen, wie Schlupf, die Zeitweise zwischen den Wälzpartnern entstehen können. Die Wälzbelastung wird durch das aneinander Abwälzen der einzelnen Wälzpartner zwischen den Wälzpartnern erzeugt. Derartige Wälzpartner sind Innen- und Außenringe sowie Wälzkörper (Kugeln und Rollen). Insbesondere der Anwendung in Lagern für die Luft- und Raumfahrt, ist vorgesehen, dass ein oder mehrere Elemente des Wälzlagers mit den erfindungsgemäßen Druckspannungen kombiniert sind.

Es sind alternativ auch Paarungen von Wälzlagerteilen vorgesehen, die zusätzlich zu den vorgenannten Paarungen auch eine oder mehrere Paarungen mit Elementen aus gleichem Material eingehen und von denen jedoch mindestens ein Element die erfindungsgemäßen Druckspannungen aus thermochemischer Behandlung und mindestens eines der Elemente diese Druckspannungen entweder oder nicht aufweist. Dies ist zum Beispiel der Fall, wenn in einem Wälzlager Wälzkörper aus Stahl und gleichzeitig Wälzkörper aus Keramik verbaut sind. Daraus ergeben sich auch Paarungen, in denen wenigstens zwei oder mehr miteinander gepaarte Teile aus Stahl, von denen zusätzlich wenigstens eines mit dem Wälzlagerteil aus Keramik gepaart ist, die erfindungsgemäßen Druckspannungen aufweisen und aus zueinander gleichen oder aus zueinander unterschiedlichen Stahlsorten sind. So ist von der Erfindung auch ein Wälzlager betroffen, bei dem sowohl wenigstens einer der Lagerringe als auch zumindest einige der Wälzkörper aus Stahl die Druckeigenspannungen aus thermochemischer Behandlung aufweisen. Es ist in diesem Fall möglich, dass die Lagerringe aus einem Stahl anderer oder gleicher Zusammensetzung zu dem der Wälzkörper aus Stahl sind und nur einer der Stahl auf Stahl Partner die Druckspannungen aufweist.

### Beschreibung der Zeichnungen

Die Erfindung wird nachfolgend anhand eines Ausführungsbeispieles und anhand von hauseigenen Versuchs- und Berechnungsergebnissen näher erläutert. Figur 1 zeigt schematisch und stark vereinfacht ein Wälzlager, mit dem die Erfindung realisiert ist. Figur 2 zeigt in Diagrammform den Bereich in Oberflächennähe, in dem die Druckeigenspannungen gemäß Erfindung ausgebildet sind. Figur 3 zeigt die Darstellung von Mess- und Berechnungsergebnissen in Diagrammform zu Spannungen unter der Oberfläche von einfach-gehärtetem Stahl der Sorte M50 in der Gegenüberstellung zu Duplex- gehärtetem Stahl der Sorte M50. Figur 4 zeigt in Diagrammform den Härteverlauf in Oberflächennähe für ein erfindungsgemäßes Wälzlagerbauteil aus Duplex-gehärtetem Stahl M50. Figur 5 zeigt die Darstellung von Mess- und Berechnungsergebnissen in Diagrammform zu Spannungen unter der Oberfläche von einfach- gehärtetem Stahl der Sorte M50NiL in der Gegenüberstellung zu Duplex-gehärtetem Stahl der Sorte M50NiL. Figur 6 zeigt den Härteverlauf in Oberflächennähe für ein erfindungsgemäßes Wälzlagerbauteil aus Duplex-gehärtetem Stahl M50NiL.

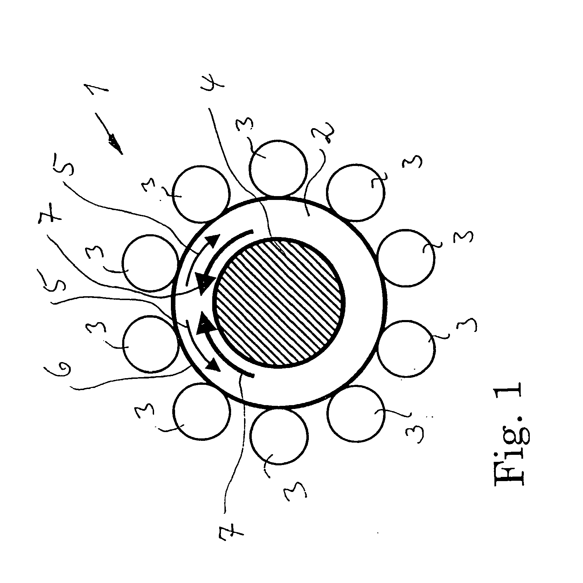

Figur 1, zeigt als Ausführungsbeispiel der Erfindung, ein Wälzlager 1 aus einen Innenring 2 und aus Wälzkörpern 3 in Form von Kugeln. Die Kugeln sind aus Keramik. Die Kugeln und der Innenring 2 sind die Wälzpartner. Der Innenring 2 sitzt mit einem Presssitz auf einer Welle 4. Die Welle 4 rotiert mit hohen Drehzahlen wahlweise in Uhrzeigerrichtung oder entgegengesetzt dazu. Die Kräfte aus dem Presssitz und die Fliehkräfte aus der Rotation erzeugen Zugspannungen 5 (Umfangsspannungen) in der Randschicht 6 des Innenringes 2. Das Gefüge der Randschicht 6 weist am unverbauten Ring Druckeigenspannungen 7 auf, die die Zuspannungen 5 in entgegensetzte Richtung überlagern und diese aufgrund des größeren Wertes und der zu den Zugspannungen entgegengesetzten Wirkrichtung kompensieren.

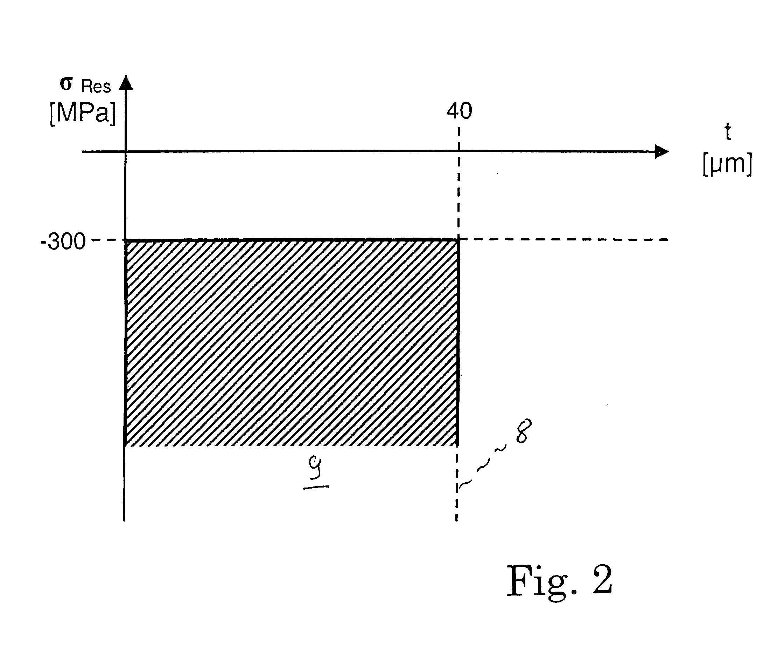

Figur 2 zeigt in Diagrammform die Ergebnisse der Erfindung. Es sind die Druckeigenspannungen σ _{Res} in MPa einer lastfreien Randschicht in Abhängigkeit von der Tiefe t der Randschicht in µm dargestellt. Die Druckeigenspannungen σ _{Res} herrschen zumindest unter einem für Wälzbelastung vorgesehenen Abschnitt der Oberfläche eines Lagerringes oder eines Wälzkörpers vor. Die Abszisse des Diagramms steht für die Randschichttiefe t in Mikrometer. Die Ordinate im Bild unterhalb der Abszisse steht für die mit negativem Vorzeichen versehenen sowie aus Zug und Druck resultierende Druckspannungen (in Megapascal) in der Randschicht. Der weitere Verlauf der Ordinate im Bild oberhalb der Abszisse im Pfeilrichtung steht für die sich nachteilig auswirkenden und mit positivem Vorzeichen versehenen Zugspannungen. Die Linie 8 markiert den Abstand von 40 µm von der Oberfläche aus bis zu dem die Druckeigenspannungen σ _{Res} maximal den Wert von - 300 und weniger aufweisen Der sich aus dem Betrag der Druckeigenspannungen ergebende positive Wert der Druckspannungen ist demnach 300 MPa und mehr, z.B. auch 1000 bis1200 MPa.

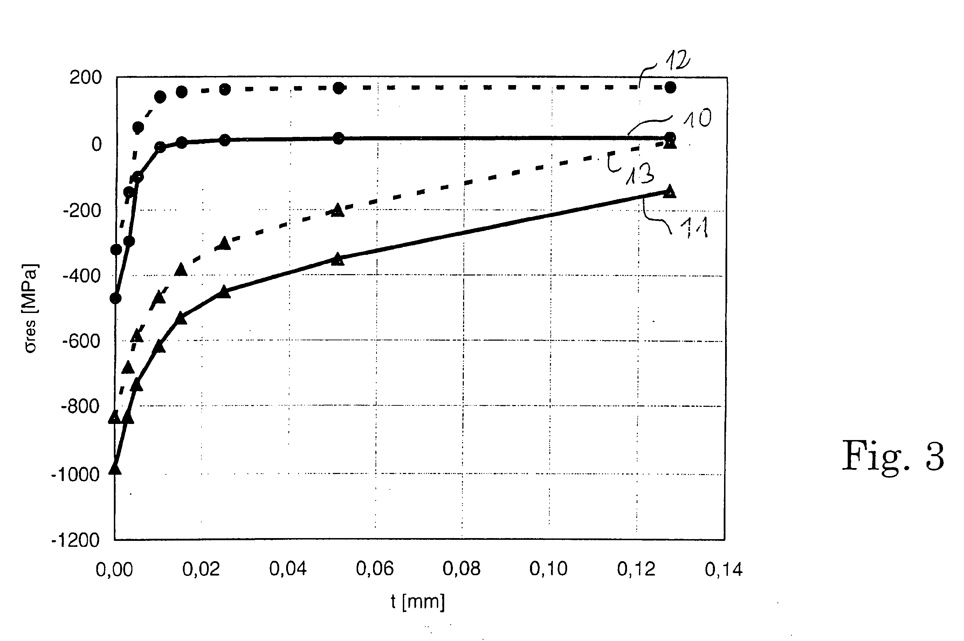

Figur 3 zeigt den Verlauf von Druckeigenspannungen σ _{Res} in MPa in einer Randschicht in Abhängigkeit von dem Abstand t (in µm) von der Oberfläche. Die Abszisse des Diagramms steht auch für die vom Rand ausgehende Schichttiefe t in Mikrometern und die Ordinate für die resultierenden Spannungen in Megapascal in der Schicht. Der Bereich im Bild oberhalb der Spannungen σ _{Res} = 0 steht für die sich nachteilig auswirkenden und mit positivem Vorzeichen versehenen Zugspannungen - der Bereich unterhalb σ _{Res} = 0 steht für die mit negativem Vorzeichen versehenen Druckspannungen.

Es sind zunächst mit den Linien 10 und 11 die Verläufe der Eigenspannungen lastfreier Randschichten für Wälzlagerbauteile aus Stahl der Sorte M50 ohne die erfindungsgemäß veränderte Randschicht und für ein Bauteil aus Stahl der Sorte M50DH gegenübergestellt. Die Verläufe für die lastfreien Zustände sind für beide Stahlsorten mit Volllinien markiert. Die Linie 10 zeigt den Verlauf der Spannungen für den Stahl M50 und die Linie 11 den Verlauf für den Stahl M50 DH. Die Nachsetzzeichen DH stehen für Duplex-Hardening und kennzeichnen ein Bauteil, in dem erfindungsgemäß in Oberflächennähe thermochemisch Druckeigenspannungen erzeugt sind. Es folgt dann die Gegenüberstellung der mit den gestrichelt dargestellten Linien 12 und 13 dargestellten Verläufe der Spannungen der gleichen zuvor erwähnten jedoch hierbei belasteten Randschichten.

Die Randzone des Bauteils aus M50 weist im lastfreien Zustand zunächst bis zu ca. einer Tiefe t von 0,08 - 0,01 mm unter der Oberfläche Druckeigenspannungen auf, die an der Oberfläche den Wert von ca. - 500MPa aufweisen und dann bei 0,08 - 0,01 mm gegen Null gehen. Mit zunehmender Tiefe t ab 0,01 bis zu einer Tiefe t von 0,12mm verläuft die Linie 10 in einem Bereich, in dem, abgesehen von einer eher vernachlässigbaren leichten Tendenz zu Zugspannungen hin, nahezu keine Eigenspannungen positiver oder negativer Natur vorherrschen.

Die Randzone des Bauteils aus M50DH dagegen weist die aus der thermochemischen Behandlung hervorgehenden Druckeigenspannungen gemäß Erfindung auf. Deren Verlauf ist von dem Wert -1000MPa an der Oberfläche bis hin zu ca. -180 MPa bei einer Tiefe t von ca. 0,12 mm unter der Oberfläche mit der Linie 11 dargestellt.

Die Spannungsverläufe für die gleichen aber belasteten Bauteile bzw. Randzonen sind in Figur 3 mit gestrichelten Linien 12 und 13 dargestellt. Belastungen auf die Bauteile sind die, die zumindest in dem betrachteten Randzonenbereich Zugspannungen hervorrufen. Diese Zugspannungen können, wie nachfolgend beschrieben, die Druckeigenspannungen so überlagern, dass die Druckeigenspannungen durch die Betriebszugspannungen verringert oder kompensiert oder von den Zugspannungen in der betragsmäßigen Größe übertroffen werden. Die Belastungen sind nach den in Figur 3 dargestellten Ergebnissen durch eine Verschiebung der Spannungen in Richtung des positiven Spannungsbereiches von 150 MPa über den gesamten Verlauf charakterisiert (Umfangsspannungen von 150 MPa aus Presssitz und Fliehkraft).

Die Randzone des Bauteils aus M50 (Linie 12) weist im belasteten Zustand zunächst an der Oberfläche mit ca. - 320MPa noch Druckeigenspannungen auf, die schon bei 0,003 - 0,005mm Tiefe durch Zugspannungen aufgehoben sind. Ab 0,003 bis 0,005mm Abstand von der Oberfläche und tiefer weist die Randschicht Zugspannungen auf. Mit zunehmender Tiefe t ab 0,01 bis zu einer Tiefe t von 0,12mm ist die Randzone des Bauteils aus M50 durch nahezu konstante Zugspannungen nahe +200 MPa gefährdet.

Die Randzone des Bauteils aus M50DH mit Druckspannungen gemäß Erfindung (Linie 13) weist im belasteten Zustand an der Oberfläche Druckeigenspannungen von ca. -820MPa auf, die jedoch erst bei einer Tiefe von 0,12 mm durch Zugspannungen aufgehoben sind. Die Randschicht kann aufgrund der mit thermochemischer Behandlung erzeugten Druckeigenspannungen hohen Niveaus in relevanter Tiefe nicht von den Zugspannungen aus Belastungen übertroffen werden und ist weniger gefährdet.

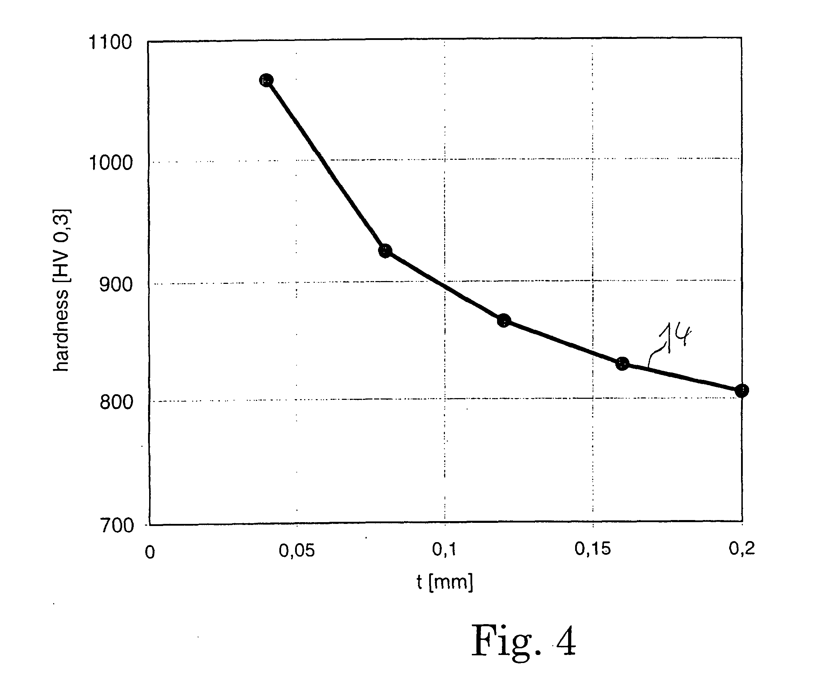

Mit der Linie 14 ist in Figur 4 der Verlauf der Härte in der Randschicht eines DH-behandelten Wälzlagerbauteils dargestellt, wie es in Figur 3 beschrieben wurde. Die Randzone des Bauteils aus M50DH mit Druckspannungen gemäß Erfindung (Linie 11 und 13) weist in einer Tiefe von 0,05 mm unter der Oberfläche eine Härte von über 1000 HV0,3 und bei einer Tiefe von 0,2mm immer noch einen Wert von 800 HV0,3 auf.

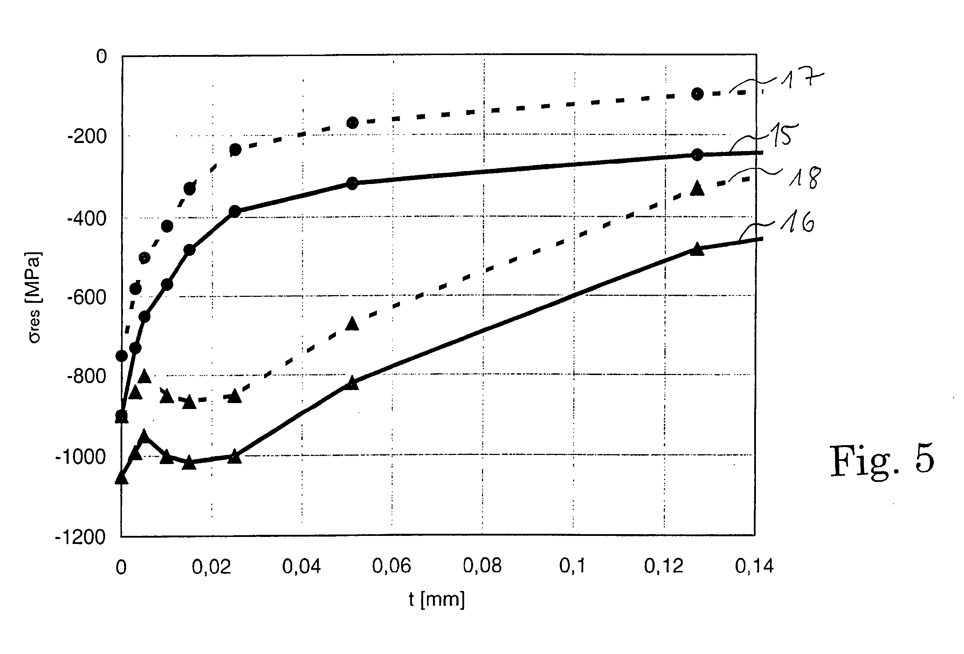

Figur 5 zeigt den Verlauf von Druckeigenspannungen σ _{Res} in MPa in einer Randschicht in Abhängigkeit von dem Abstand t (in µm) von der Oberfläche. Die Abszisse des Diagramms steht auch für die vom Rand ausgehende Schichttiefe t in Mikrometern und die Ordinate für die resultierenden Spannungen in Megapascal in der Schicht. Der Bereich unterhalb σ _{Res} = 0 steht für die mit negativem Vorzeichen versehenen Druckspannungen.

Es sind mit den Linien 15 und 16 die Verläufe der Eigenspannungen lastfreier Randschichten für Wälzlagerbauteile aus Stahl der Sorte M50 NiL, ohne die erfindungsgemäß veränderte Randschicht, und für ein Bauteil aus Stahl der Sorte M50 NiLDH gegenübergestellt. Die Verläufe für die lastfreien Zustände sind für beide Stahlsorten mit Volllinien markiert. Die Linie 15 zeigt den Verlauf der Spannungen für den Stahl M50 NiL und die Linie 16 den Verlauf für den Stahl M50 NiLDH. Die Nachsetzzeichen DH stehen für Duplex-Hardening. Es folgt die Gegenüberstellung der mit den gestrichelt dargestellten Linien 17 und 18 dargestellten Verläufe der Spannungen der gleichen jedoch belasteten Randschichten. Die Linie 17 zeigt den Verlauf der Spannungen für den Stahl M50 NiL und die Linie 18 den Verlauf für den Stahl M50 NiLDH bei belasteter Randschicht.

Figur 5 beschreibt ein Ausführungsbeispiel der Erfindung, mit dem ein Werkstoff mit ohnehin schon relativ guten Spannungsverläufen und Zuständen in der Randschicht mittels der Erfindung noch weiter verbessert werden konnte.

Die Randzone des Bauteils aus M50 NiL weist im lastfreien und im belasteten Zustand unter der Oberfläche Druckeigenspannungen auf. Für das Bauteil aus M50 NiLDH trifft dies ebenso zu. Die Beträge der Druckeigenspannungen des Bauteiles aus M50 NiLDH sind jedoch wesentlich höher - bei einer Tiefe von der Oberfläche aus von 0,02 beträgt die Differenz aus Druckeigenspannung für das Bauteil aus M50 NiLDH (Linie 18) und aus der Druckeigenspannung des Bauteils aus M50 NiL (Linie 17) ca. 550 MPa. Damit ist auch in diesem Fall das Duplex-gehärtete Bauteil belastbarer. Mit zunehmender Tiefe der Randschicht verringert sich diese Differenz und liegt jedoch bei einer Tiefe t von 0,12mm immer noch bei über 200 MPa. Die Belastungen sind, wie auch bei den in Figur 3 dargestellten Ergebnissen, durch eine Verschiebung der Spannungen in Richtung des positiven Spannungsbereiches von 150 MPa über den gesamten Verlauf charakterisiert (Umfangsspannungen von 150 MPa aus Presssitz und Fliehkraft).

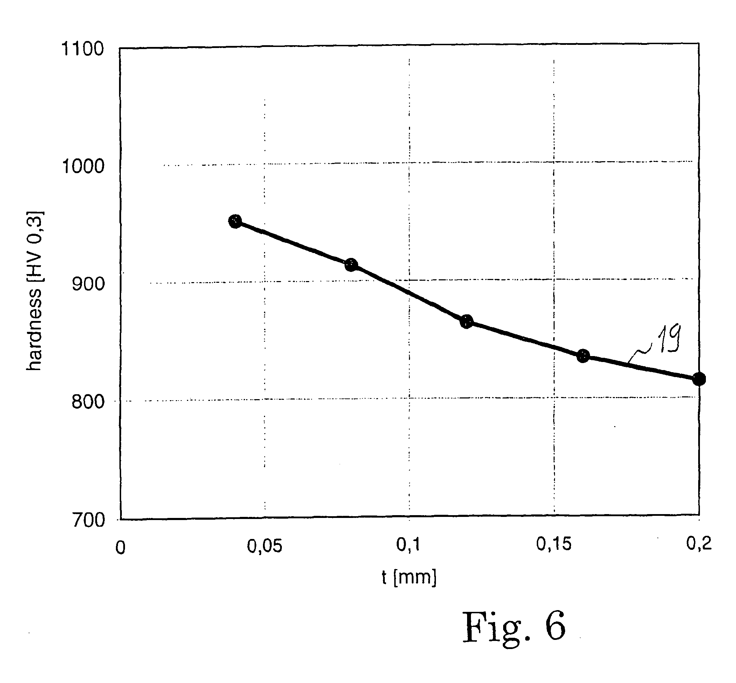

Mit der Linie 19 ist in Figur 6 der mögliche Verlauf der Härte in der Randschicht eines erfindungsgemäßen Wälzlagerbauteils dargestellt, wie es beispielsweise in Figur 5 beschrieben wurde. Die Randzone des Bauteils aus M50 NiLDH mit Druckspannungen gemäß Erfindung (Linie 16 und 18) weist in einer Tiefe von 0,05 mm unter der Oberfläche eine Härte von über 900 HV0,3 und bei einer Tiefe von 0,2 mm immer noch einen Wert von über 800 HV0,3 auf.

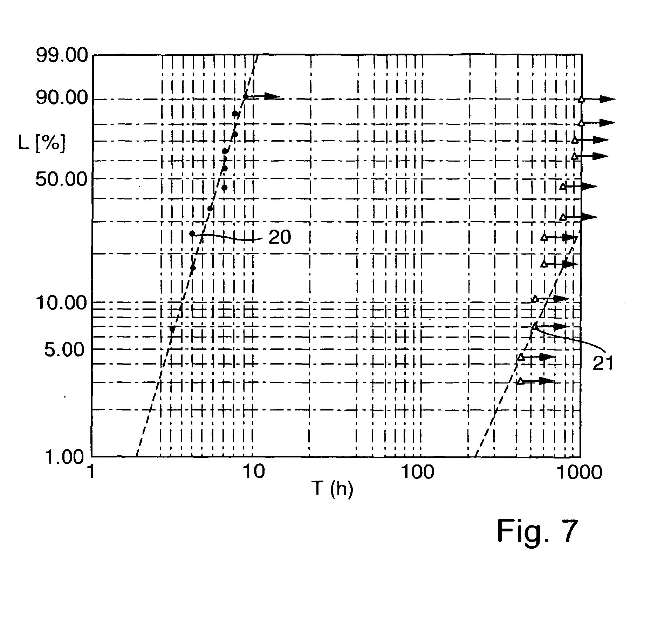

Figur 7 zeigt ein Diagramm, in dem die Ergebnisse 20 zu Lebensdauerversuchen eines im weiteren als Standardlager bezeichneten Lagers aus M50 und mit Wälzkörpern aus Stahl den Ergebnissen 21 eines Hybridlagers mit Duplex-gehärteten Laufringen aus M50DH und mit Wälzkörpern aus Keramik gegenübergestellt sind. Die Messergebnisse 20 der Standardlager sind punktförmig, die Messergebnisse 21 des Hybridlagers in Form von Dreiecken abgebildet. Die von den Messergebnissen 20, 21 ausgehenden horizontal ausgerichteten Pfeile markieren die Prüflinge, die bei der im Diagramm festgehaltenen Laufzeit T immer noch nicht ausgefallen waren.

Der Test wurde unter folgenden Bedingungen durchgeführt: Axiallast 4,1 kN als Belastung bei einer Temperatur von ca. 120°C in aus Gebrauch stark verschmutztem Motorenöl für Dieselmotoren bei p_{0,1R} von 2300 MPa für die Stahlkugeln und bei p_{0,1R} von 2600 MPa für die Kugeln aus Keramik. Es ist ersichtlich, dass bei einer Ausfallwahrscheinlichkeit L von 10% (L₁₀) durch die Prüflinge der Hybridlager gemäß Erfindung das ca. 180-fache und mehr an Laufzeit T in Stunden gegenüber den Prüflingen aus Standardlagern erreicht wurde.

## Patentansprüche

1. Wälzlager, mit wenigstens einem ersten Wälzpartner, nämlich einem Wälzkörper, aus einem keramischen Werkstoff, sowie das Wälzlager weiter mit wenigstens einem zweiten Wälzpartner, nämlich einem Lagerring, aus einem Stahl mit martensitischem Gefüge, wobei zumindest ein Abschnitt der Oberfläche des zweiten Wälzpartners für einen Wälzkontakt mit dem ersten Wälzpartner vorgesehen ist und wobei zumindest in einem lastfreien Zustand wenigstens an dem Abschnitt in einer thermochemisch erzeugten und mit Stickstoff angereicherten Randschicht Druckeigenspannungen unter der Oberfläche des zweiten Wälzpartners ausgebildet sind wobei die Druckeigenspannungen in einer thermochemisch erzeugten Randschicht des fertig bearbeiteten zweiten Wälzpartners vorliegen, **dadurch gekennzeichnet, dass** der Wert thermochemisch erzeugter Druckeigenspannungen zumindest unter der Oberfläche an dem Abschnitt von der Oberfläche aus bis zu einer Tiefe von mindestens 40 µm mindestens dem Absolutbetrag von -300MPa entspricht, wobei die Randschicht zumindest an dem Abschnitt eine Härte von mindestens 850HV0,3 in einer Tiefe von 0,05mm unterhalb der Oberfläche aufweist.

2. Wälzlager nach Anspruch 1, mit der durch Gasnitrieren, insbesondere durch Plasmanitrieren, erzeugten Randschicht.

3. Wälzlager nach Anspruch 1, mit den Druckeigenspannungen in einer Randschicht, die ein zweifach wärmebehandeltes Gefüge aufweist.

4. Wälzlager nach Anspruch 3, bei dem der zweite Wälzpartner aus einem Stahlwerkstoff ist, dessen Gefüge, nach einer ersten Wärmebehandlung, für eine zweite Wärmebehandlung mit einer Prozesstemperatur von mindestens 400°C geeignet ist.

5. Wälzlager nach Anspruch 1, mit einem zweiten Wälzpartner aus Stahl der Bezeichnung M50 mit
- 0,8 bis 0,85 Gewichts- % Kohlenstoff
- 4 bis 4,25 Gewichts- % Chrom
- 4 bis 4,5 Gewichts- % Molybdän
- 0,9 bis 1,1 Gewichts- % Vanadium
- 0,15 bis 0,35 Gewichts- % Mangan
- 0,1 bis 0,25 Gewichts- % Silizium
- max. 0,015 Gewichts- % Phosphor
- max. 0,008 Gewichts- % Schwefel.

6. Wälzlager nach Anspruch 1, mit einem zweiten Wälzpartner aus Stahl der Bezeichnung M50NiL mit:
- 0,11 bis 0,15 Gewichts- % Kohlenstoff
- 4,0 bis 4,25 Gewichts- % Chrom
- 4,0 bis 4,5 Gewichts- % Molybdän
- 1,1 bis 1,3 Gewichts- % Vanadium
- 3,2 bis 3,6 Gewichts- % Nickel.
- 0,15 bis 0,35 Gewichts- % Mangan
- 0,1 bis 0,25 Gewichts- % Silizium
- max. 0,015 Gewichts- % Phosphor
- max. 0,008 Gewichts- % Schwefel.

7. Wälzlager nach Anspruch 1, mit einem zweiten Wälzpartner aus Stahl der Bezeichnung 32CD V13 mit:
- 0,29 bis 0,36 Gewichts- % Kohlenstoff
- 2,8 bis 3,3 Gewichts- % Chrom
- 0,7 bis 1,2 Gewichts- % Molybdän
- 0,15 bis 0,35 Gewichts- % Vanadium
- 0,4 bis 0,7 Gewichts- % Mangan
- 0,1 bis 0,4 Gewichts- % Silizium
- max. 0,025 Gewichts- % Phosphor
- max. 0,02 Gewichts- % Schwefel.

8. Wälzlager nach Anspruch 1, mit einem zweiten Wälzpartner aus Stahl der Bezeichnung T1 (S 18-0-1) mit:
- 0,7 bis 0,8 Gewichts- % Kohlenstoff
- 4 bis 5 Gewichts- % Chrom
- 17,5 bis 18,5 Gewichts- % Wolfram
- 1 bis 1,5 Gewichts- % Vanadium
- 0 bis 0,4 Gewichts- % Mangan
- 0,15 bis 0,35 Gewichts- % Silizium
- max. 0, 025 Gewichts- % Phosphor
- max. 0, 008 Gewichts- % Schwefel.

9. Wälzlager nach Anspruch 1, mit einem zweiten Wälzpartner aus Stahl der Bezeichnung RBD mit:
- 0,17 bis 0,21 Gewichts- % Kohlenstoff
- 2,75 bis 3,25 Gewichts- % Chrom
- 9,5 bis 10,5 Gewichts- % Wolfram
0,2 bis 0,4 Gewichts- % Mangan
0 bis 0,35 Gewichts- % Silizium
- 0,35 bis 0,5 Gewichts- % Vanadium
- max. 0, 015 Gewichts- % Phosphor
- max. 0, 015 Gewichts- % Schwefel.

10. Wälzlager nach Anspruch 1, mit einem zweiten Wälzpartner aus Stahl der Bezeichnung Pyrowear 675 mit:
- 0,06 bis 0,08 Gewichts- % Kohlenstoff
- 12,8 bis 13,3 Gewichts- % Chrom
- 1,5 bis 2,0 Gewichts- % Molybdän
- 0,5 bis 0,7 Gewichts- % Vanadium
- 2,2 bis 2,8 Gewichts- % Nickel
- 4,8 bis 5,8 Gewichts- % Kobalt
- 0,5 bis 1,0 Gewichts- % Mangan
- 0,2 bis 0,6 Gewichts- % Silizium.

11. Wälzlager nach Anspruch 1, bei dem der erste Wälzpartner aus Siliziumnitrid ist.

## Claims

1. Roller bearing, having at least one first rolling partner, namely a rolling body, made from a ceramic material, and the roller bearing also having at least one second rolling partner, namely a bearing ring, made from a steel with a martensitic microstructure, with at least a portion of the surface of the second rolling partner being intended for rolling contact with the first rolling partner, and residual compressive stresses being formed beneath the surface of the second rolling partner at least at the portion, in a thermochemically produced and nitrogen-enriched outer layer and at least in a load-free state, the residual compressive stresses being present in a thermochemically produced outer layer of the fully machined second rolling partner, **characterized in that** the level of thermochemically produced residual compressive stresses, at least beneath the surface at the portion, starting from the surface down to a depth of at least 40 µm, corresponding at least to an absolute value of -300 MPa, the outer layer, at least at the portion, having a hardness of at least 850 HV0.3 at a depth of 0.05 mm below the surface.

2. Roller bearing according to Claim 1, having the outer layer produced by gas nitriding, in particular by plasma nitriding.

3. Roller bearing according to Claim 1, having the residual compressive stresses in an outer layer which has a microstructure that has been heat-treated twice.

4. Roller bearing according to Claim 3, in which the second rolling partner is made from a steel material whose microstructure, following a first heat treatment, is suitable for a second heat treatment at a process temperature of at least 400°C.

5. Roller bearing according to Claim 1, having a second rolling partner made from steel of designation M50, comprising
- 0.8 to 0.85% by weight of carbon
- 4 to 4.25% by weight of chromium
- 4 to 4.5% by weight of molybdenum
- 0.9 to 1.1% by weight of vanadium
- 0.15 to 0.35% by weight of manganese
- 0.1 to 0.25% by weight of silicon
- max. 0.015% by weight of phosphorus
- max. 0.008% by weight of sulfur.

6. Roller bearing according to Claim 1, having a second rolling partner made from steel of designation M50NiL, comprising:
- 0.11 to 0.15% by weight of carbon
- 4.0 to 4.25% by weight of chromium
- 4.0 to 4.5% by weight of molybdenum
- 1.1 to 1.3% by weight of vanadium
- 3.2 to 3.6% by weight of nickel
- 0.15 to 0.35% by weight of manganese
- 0.1 to 0.25% by weight of silicon
- max. 0.015% by weight of phosphorus
- max. 0.008% by weight of sulfur.

7. Roller bearing according to Claim 1, having a second rolling partner made from steel of designation 32CD V13, comprising:
- 0.29 to 0.36% by weight of carbon
- 2.8 to 3.3% by weight of chromium
- 0.7 to 1.2% by weight of molybdenum
- 0.15 to 0.35% by weight of vanadium
- 0.4 to 0.7% by weight of manganese
- 0.1 to 0.4% by weight of silicon
- max. 0.025% by weight of phosphorus
- max. 0.02% by weight of sulfur.

8. Roller bearing according to Claim 1, having a second rolling partner made from steel of designation T1 (S 18-0-1), comprising:
- 0.7 to 0.8% by weight of carbon
- 4 to 5% by weight of chromium
- 17.5 to 18.5% by weight of tungsten
- 1 to 1.5% by weight of vanadium
- 0 to 0.4% by weight of manganese
- 0.15 to 0.35% by weight of silicon
- max. 0.025% by weight of phosphorus
- max. 0.008% by weight of sulfur.

9. Roller bearing according to Claim 1, having a second rolling partner made from steel of designation RBD, comprising:
- 0.17 to 0.21% by weight of carbon
- 2.75 to 3.25% by weight of chromium
- 9.5 to 10.5% by weight of tungsten
- 0.2 to 0.4% by weight of manganese
- 0 to 0.35% by weight of silicon
- 0.35 to 0.5% by weight of vanadium
- max. 0.015% by weight of phosphorus
- max. 0.015% by weight of sulfur.

10. Roller bearing according to Claim 1, having a second rolling partner made from steel of designation Pyrowear 675, comprising:
- 0.06 to 0.08% by weight of carbon
- 12.8 to 13.3% by weight of chromium
- 1.5 to 2.0% by weight of molybdenum
- 0.5 to 0.7% by weight of vanadium
- 2.2 to 2.8% by weight of nickel
- 4.8 to 5.8% by weight of cobalt
- 0.5 to 1.0% by weight of manganese
- 0.2 to 0.6% by weight of silicon.

11. Roller bearing according to Claim 1, in which the first rolling partner is made from silicon nitride.

## Revendications

1. Palier de roulement présentant au moins un premier partenaire de roulement, à savoir un corps de roulement en un matériau céramique, le palier de roulement étant en outre doté d'au moins un deuxième partenaire de roulement, à savoir une bague de roulement, en un acier à réseau martensitique, au moins une partie de la surface du deuxième partenaire de roulement étant prévue pour un contact de roulement avec le premier partenaire de roulement et, au moins dans un état exempt de charge, des contraintes de compression propres étant formées en dessous de la surface du deuxième partenaire de roulement dans la partie d'une couche de bordure formée par voie thermochimique et enrichie en azote, les contraintes de compression propres étant prévues dans une couche de bordure formée par voie thermochimique du deuxième partenaire de roulement prêt à l'emploi, **caractérisé en ce qu'**au moins en dessous de la surface sur la partie de la surface, la valeur des contraintes de compression propres formées par voie thermochimique correspond au moins à la valeur absolue de -300 MPa jusqu'à une profondeur d'au moins 40 µm et **en ce que** la couche de bordure présente au moins sur la partie une dureté d'au moins 850 HV 0,3 à une profondeur de 0,05 mm en dessous de la surface.

2. Palier de roulement selon la revendication 1, dont la couche de bordure est formée par nitruration à l'aide d'un gaz et en particulier par nitruration au plasma.

3. Palier de roulement selon la revendication 1, dans lequel les contraintes propres de compression sont présentes dans une couche de bordure qui présente un réseau traité thermiquement deux fois.

4. Palier de roulement selon la revendication 3, dans lequel le deuxième partenaire de roulement est constitué d'un matériau d'acier dont le réseau, après un premier traitement thermique, convient pour un deuxième traitement thermique à une température de traitement d'au moins 400°C.

5. Palier de roulement selon la revendication 1, dont le deuxième partenaire de roulement est constitué d'un acier appelé M50 et présentant :
- de 0,8 à 0,85 % en poids de carbone,
- de 4 à 4,25 % en poids de chrome,
- de 4 à 4,5 % en poids de molybdène,
- de 0,9 à 1,1 % en poids de vanadium,
- de 0,15 à 0,35 % en poids de manganèse,
- de 0,1 à 0,25 % en poids de silicium,
- au maximum 0,015 % en poids de phosphore et
- au maximum 0,008 % en poids de soufre.

6. Palier de roulement selon la revendication 1, dont le deuxième partenaire de roulement est constitué d'un acier appelé M50NiL qui présente :
- de 0,11 à 0,15 % en poids de carbone,
- de 0,4 à 4,25 % en poids de chrome,
- de 4,0 à 4,5 % en poids de molybdène,
- de 1,1 à 1,3 % en poids de vanadium,
- de 3,2 à 3,6 % en poids de nickel,
- de 0,15 à 0,35 % en poids de manganèse,
- de 0,1 à 0,25 % en poids de silicium,
- au maximum 0,015 % en poids de phosphore et
- au maximum 0,008 % en poids de soufre.

7. Palier de roulement selon la revendication 1, dont le deuxième partenaire de roulement est constitué d'acier appelé 32CD V13 qui présente :
- de 0,29 à 0,36 % en poids de carbone,
- de 2,8 à 3,3 % en poids de chrome,
- de 0,7 à 1,2 % en poids de molybdène,
- de 0,15 à 0,35 % en poids de vanadium,
- de 0,4 à 0,7 % en poids de manganèse,
- de 0,1 à 0,4 % en poids de silicium,
- au maximum 0,025 % en poids de phosphore et
- au maximum 0,02 % en poids de soufre.

8. Palier de roulement selon la revendication 1, dont le deuxième partenaire de roulement est constitué d'acier appelé T1 (S 18-0-1) qui présente :
- de 0,7 à 0,8 % en poids de carbone,
- de 4 à 5 % en poids de chrome,
- de 17,5 à 18,5 % en poids de tungstène,
- de 1 à 1,5 % en poids de vanadium,
- de 0 à 0,4 % en poids de manganèse,
- de 0,15 à 0,35 % en poids de silicium,
- au maximum 0,025 % en poids de phosphore et
- au maximum 0,008 % en poids de soufre.

9. Palier de roulement selon la revendication 1, dont le deuxième partenaire de roulement est constitué d'acier appelé RBD, qui présente :
- de 0,17 à 0,21 % en poids de carbone,
- de 2,75 à 3,25 % en poids de chrome,
- de 9,5 à 10,5 % en poids de tungstène,
- de 0,2 à 0,4 % en poids de manganèse,
- de 0 à 0,35 % en poids de silicium,
- de 0,35 à 0,5 en poids de vanadium,
- au maximum 0,015 % en poids de phosphore et
- au maximum 0,015 % en poids de soufre.

10. Palier de roulement selon la revendication 1, dont le deuxième partenaire de roulement est constitué d'acier appelé Pyrowear 675, qui présente :
- de 0,06 à 0,08 % en poids de carbone,
- de 12,8 à 13,3 % en poids de chrome,
- de 1,5 à 2,0 % en poids de molybdène,
- de 0,5 à 0,7 % en poids de vanadium,
- de 2,2 à 2,8 % en poids de nickel,
- de 4,8 à 5,8 en poids de cobalt,
- de 0,5 à 1,0 % en poids de manganèse,
- de 0,2 à 0,6 % en poids de silicium.

11. Palier de roulement selon la revendication 1, dans lequel le première partenaire de roulement est réalisé en nitrure de silicium.
